# EUROPEAN PATENT SPECIFICATION

(11) **EP 1 448 953 B1**
(45) Date of publication and mention of the grant of the patent: **23.04.2008**
(21) Application number: 02793330.8
(22) Date of filing: 20.11.2002
(51) Int. Cl.: G01D 1/18, G01D 9/00, G08B 5/36

(54) **DEVICE FOR THE READING AND THE SIGNALLING OF ENVIRONMENTAL PARAMETERS**
VORRICHTUNG ZUM ABLESEN UND SIGNALISIEREN VON UMGEBUNGSPARAMETERN
DISPOSITIF DE LECTURE ET DE SIGNALISATION DE PARAMETRES ENVIRONNEMENTAUX

(30) Priority: 22.11.2001 IT VI20010244
(43) Date of publication of application: 25.08.2004
(73) Proprietor: Alfamec s.r.l., 36100 Vicenza (IT)
(72) Inventor: BIZZOTTO, Gianfranco, I-36061 Bassano del Grappa (IT); BUSON, Leonardo, I-36057 Arcugnano (VI) (IT)
(74) Representative: Terreran, Gabrio
(86) International application number: PCT/IT2002/000738
(87) International publication number: WO 2003/044466

(56) References cited:
- DE-A- 4 440 985
- FR-A- 2 702 275
- US-A- 4 003 264
- US-A- 6 072 395
- US-A- 6 078 262
- US-A1- 2002 186 129

## Description

The present invention has as its object a device for detecting, processing, indicating and recording, both electronically and on paper, sound.

It is known that exposure to certain levels of noise, for a certain amount of time, can cause temporary harm, like reduced reactivity, or permanent harm, like the loss of hearing, to the human body. Consequently, numerous countries have established health and safety laws and regulations, which prescribe the maximum levels and maximum time exposed, specifically, in places of work and places of leisure, respectively.

To this day the detection of noise levels reached in such places is carried out by specialised experts, employed by the relevant authorities, who carry out periodic measurements with suitable measurements apparatuses. Such experts, upon the basis of the detections carried out, dictate the interventions necessary to come into line with the regulations of the specific case.

A first intervention can consist of providing means suitable for indicating, in the aforementioned rooms, that an alarm or danger threshold has been reached, so that people can take suitable precautions.

A second type of intervention, mainly adopted in places of work, can consist of making people wear suitable protection like earmuffs, or else of sound-proofing, should this intervention be constructively possible and cost-effective.

On the market devices are already known which are suitable for controlling the acoustic pressure in a room, e.g. work sites, factories, discos, cinema, etc., and which are capable of giving an immediate reading when the sound pressure exceeds certain predetermined values, which can bother, or even damage, the people present in the room. Current devices comprise an electroacoustic transducer, which emits an electrical signal proportional to the acoustic pressure detected, to warn when the detected signal exceeds the threshold. The warning signal can activate acoustic indicator means like sirens.

FR272 275 discloses a device for detecting sound comprising transducer means for detecting sound, means for producing an electrical signal, means for comparing said electrical signal with one present reference signal exceeds said present reference value.

DE4440985 discloses a device for monitoring the human activities during sleeping, where the transformation of analog data into digital data in the device is carried out for the purpose of allowing the use of a computer for managing the collected data.

The main drawback of current devices, as described above, is that the indication is not suited to certain environmental conditions in each specific room, e.g. work or entertainment room. Indeed, the use of an indication alarm, which emits a sound when a dangerous acoustic level is reached, causes a further worsening of the danger, in this situation.

The secondary drawback found in current devices consists of the fact that they do not foresee the possibility of collecting and recording the detections and the indications carried out apart from in a brief period and in a discontinuous manner. The new invention in object manages to collect documentation of the detected data, both for statistical evaluations and to guarantee the quality of the environmental conditions to also be presented as documentation for external inspection by authorities concerned with noise levels. All of the documentation regarding any previous readings, which is able to be stored indefinitely on an electronic memory, can be transferred onto a paper back-up.

The device proposed here as the new invention offers the possibility of evaluating, over long periods of time, the situation and the noise levels normally present at the room being checked, it offers the possibility of integrating the detected data, the main cause of physiological damage, also to justify a possible intervention on the noise source, or sound-proofing of the room.

In real time, the device which has been foreseen indicates to the user, in a particularly clear and immediate manner, the state of the noise levels, through three indicator lights, respectively signifying normal, alarm or danger status, suggesting or imposing appropriate interventions.

The scanning of the detected signal is processed by a program inserted in a personal computer, to realise a graph for each detector and to communicate, also over a distance, with a control operator, the possible need for intervention.

Further advantages of the invention shall become clearer from the description of a preferred embodiment thereof, illustrated for non-exclusive indicating purposes in the two attached tables of drawings, in which:
- Fig.1.- represents a block diagram of the device;
- Fig.2.- represents a perspective view of a practical example of application of said device.

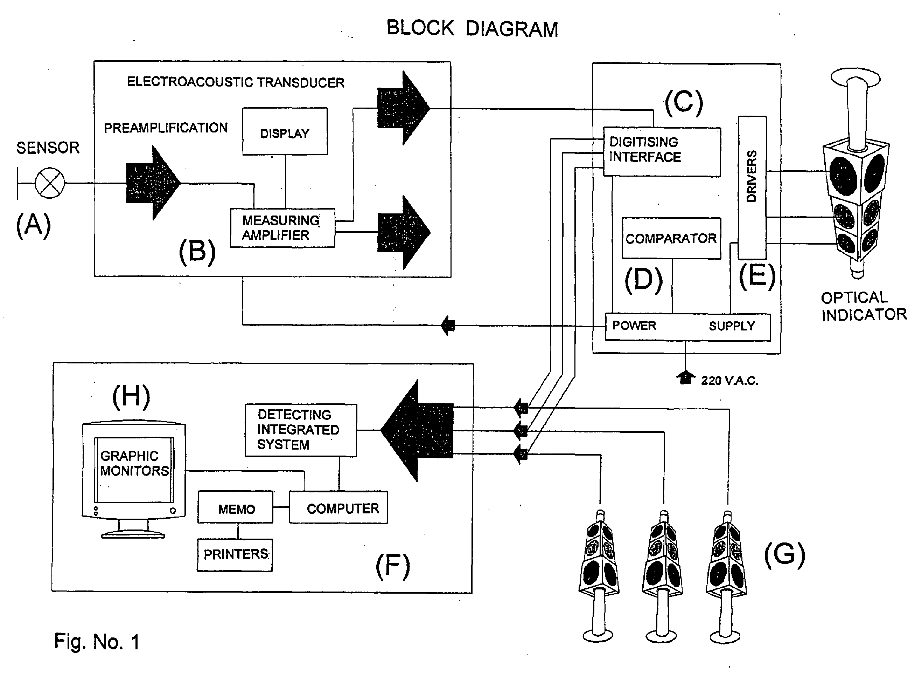

With reference, in particular, to Fig. 1.-, the device comprises detector means (A) consisting of a plurality of microphonic transducer sensors, followed by amplifiers of the proportional voltage level representing the signal (B). The device also comprises digitisers of the signal which was originally analogue and a comparator (D) to compare the levels reached and thus read, with the calibration values.

The scanning, lasting a fraction of a second, of the results of the comparison, commands the drivers (E), to switch on the indicator lights of the colour corresponding to the value (G) reached and thus read within a traffic-light type structure, and transfers the signal to the electronic processing system for recording, to make a graph on the monitor (H) for each detection, for printing (F) the graphs processed and displayed on the monitor, and for the possibility of integrating the values reached for an effective global evaluation of the quality of the room.

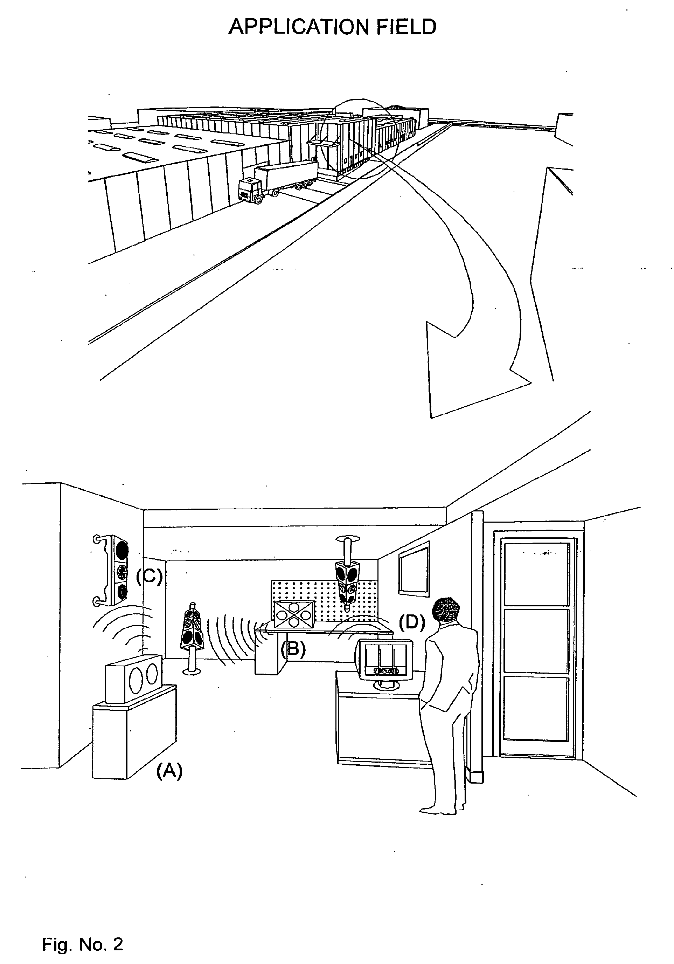

With reference, in particular, to Fig. 2.- the image represents a testing room, representing a normal workplace or place of entertainment or other situation, consisting of a noise source (A) (alternative to a work tool or operating machine normally present at a work place): detection, processing and comparing systems (B) (C), structures, e.g. of the traffic-light type to highlight the results of the processing of the detections carried out; electronic systems for recording, storing and graphical representation on a monitor, with the possibility of hard copy documentation of the evaluations carried out (D).

In practice, it has been noted how the described device achieves the predetermined task and purposes.

Moreover, the Applicant wishes to underline how the instrumentation presented, using different detectors and transducers suitable for the detection, processing control and indication of the parameters other than noise, as currently foreseen, e.g. humidity, temperature, electromagnetic pollution, fine dusts, if necessary for the purpose, e.g. to continuously check the characteristics of a production process or of atmospheric conditions in a room. In the practical embodiment, the materials, the sizes and the embodiment details can be different from those presently indicated without, for this reason, departing from the scope of protection of the present invention.

## Claims

1. Device for detecting and indicating at least one environment parameter, comprising transducer means suitable for detecting said at least one parameter detected at said environment and for producing at least one electrical signal in output proportional to it as well as indicator means, said indicator means being of the optical type and representing the state of normality, alarm or danger of the level of said parameter detected at said environment, **characterised in that** said transducer means cooperate with digitising means of said at least one signal and at least one comparating unit suitable for comparing said at least one digital signal with at least one preset reference value to generate a command signal to said indicator means.

2. Device according to claim 1) **characterised in that** said transducer means comprises at least one amplifier of the detected signal, arranged upstream of said digitising means, suitable for guaranteeing the reliability of the interpretation and transmission of said signal.

3. Device according to claim 1) or 2) **characterised in that** said indicator means, are of the traffic light type, usually associated with alarm and/or danger.

4. Device according to claim 3) **characterised in that** said traffic light type indicators comprise three lights in colours green, yellow and red, with which three noise levels inside said room are associated, representing normality, warning and danger respectively.

5. Device, according to one or more of the previous claims **characterised in that** it also comprises an electronic processing system for storing/recording, even for many years, the levels reached by said parameter detected by said transducer means.

6. Device according to claim 5) **characterised in that** said electronic processing system comprises means for filing said levels.

7. Device according to claim 6) **characterised in that** said filing means comprises at least one consultable memory unit suitable for containing said detected levels indefinitely.

8. Device according to claim 5) or 6) or 7) **characterised in that** said electronic processing system is equipped with at least one monitor suitable for graphically visualising, directly or after suitable processing, said stored values, as well as their variations in a predetermined time period.

9. Device according to claim 5) or 6) or 7) or 8) **characterised in that** said processing system comprises at least one printing unit suitable for printing, directly or after suitable processing, said stored values as well as their variations in a predetermined time period.

10. Device according to one or more of the previous claims **characterised in that** said transducer means comprises at least one electroacoustic transducer suitable for detecting the acoustic pressure existing.

11. Device according to one or more of the previous claims **characterised in that** said transducer means comprises at least one transducer, suitable for detecting the humidity.

12. Device according to one or more of the previous claims **characterised in that** said transducer means comprises at least one transducer suitable for detecting the temperature.

13. Device according to one or more of the previous claims **characterised in that** said transducer means comprises at least one transducer suitable for detecting the electromagnetic pollution.

14. Device according to one or more of the previous claims **characterised in that** said transducer means comprises at least one transducer suitable for detecting the dusts.

## Patentansprüche

1. Vorrichtung zum Messen und Anzeigen von zumindest einem Umgebungsparameter, umfassend ein Wandlermittel, das zum Messen des zumindest einen Parameters, der in der Umgebung gemessen wird, und zum Erzeugen von zumindest einem elektrischen Signal, das zu diesem proportional ist, am Ausgang geeignet ist, sowie Anzeigemittel, wobei die Anzeigemittel vom optischen Typ sind und den Normal-, Alarm- oder Gefahrenzustand des Niveaus des in der Umgebung gemessenen Parameters darstellen, **dadurch gekennzeichnet, dass** das Wandlermittel mit Digitalisierungsmitteln für das zumindest eine Signal und mit zumindest einer Vergleichereinheit zusammenarbeitet, um das zumindest eine digitale Signal mit zumindest einem voreingestellten Referenzwert zu vergleichen, um ein Befehlssignal für die Anzeigemittel zu erzeugen.

2. Vorrichtung nach Anspruch 1), **dadurch gekennzeichnet, dass** das Wandlermittel zumindest einen Verstärker für das gemessene Signal umfasst, der stromaufwärts der Digitalisierungsmittel angeordnet ist und geeignet ist, die Zuverlässigkeit der Interpretation und der Übertragung des Signals zu gewährleisten.

3. Vorrichtung nach Anspruch 1) oder 2), **dadurch gekennzeichnet, dass** die Anzeigemittel vom Verkehrsampeltyp sind, die üblicherweise mit Alarm und/oder Gefahr assoziiert werden.

4. Vorrichtung nach Anspruch 3), **dadurch gekennzeichnet, dass** die Anzeigen vom Verkehrsampeltyp drei Leuchten in den Farben grün, gelb und rot umfassen, denen drei Geräuschpegel im Inneren des Raums zugeordnet sind, die Normalität, Warnung bzw. Gefahr darstellen.

5. Vorrichtung nach einem oder mehreren der vorangegangenen Ansprüche, **dadurch gekennzeichnet, dass** sie ferner ein elektronisches Verarbeitungssystem zum Speichern/Aufzeichnen, auch über viele Jahre hinweg, der Niveaus, die der vom Wandlermittel gemessene Umgebungsparameter erreicht, umfasst.

6. Vorrichtung nach Anspruch 5), **dadurch gekennzeichnet, dass** das elektronische Verarbeitungssystem ein Mittel zum Archivieren der Niveaus umfasst.

7. Vorrichtung nach Anspruch 6), **dadurch gekennzeichnet, dass** das Mittel zum Archivieren zumindest eine abfragbare Speichereinheit umfasst, die dazu geeignet ist, die gemessenen Niveaus unbegrenzt zu enthalten.

8. Vorrichtung nach Anspruch 5) oder 6) oder 7), **dadurch gekennzeichnet, dass** das elektronische Verarbeitungssystem mit zumindest einem Monitor ausgestattet ist, der dazu geeignet ist, die gespeicherten Werte sowie deren Variationen in einem vorbestimmten Zeitraum direkt oder nach geeigneter Verarbeitung graphisch darzustellen.

9. Vorrichtung nach Anspruch 5) oder 6) oder 7) oder 8), **dadurch gekennzeichnet, dass** das elektronische Verarbeitungssystem zumindest eine Druckereinheit umfasst, die dazu geeignet ist, die gespeicherten Werte sowie deren Variationen in einen vorbestimmten Zeitraum direkt oder nach geeigneter Verarbeitung zu drucken.

10. Vorrichtung nach einem oder mehreren der vorangegangenen Ansprüche, **dadurch gekennzeichnet, dass** das Wandlermittel zumindest einen elektroakustischen Wandler umfasst, der zur Messung des bestehenden Schalldrucks geeignet ist.

11. Vorrichtung nach einem oder mehreren der vorangegangenen Ansprüche, **dadurch gekennzeichnet, dass** das Wandlermittel zumindest einen Wandler umfasst, der zur Messung der Feuchtigkeit geeignet ist.

12. Vorrichtung nach einem oder mehreren der vorangegangenen Ansprüche, **dadurch gekennzeichnet, dass** das Wandlermittel zumindest einen Wandler umfasst, der zur Messung der Temperatur geeignet ist.

13. Vorrichtung nach einem oder mehreren der vorangegangenen Ansprüche, **dadurch gekennzeichnet, dass** das Wandlermittel zumindest einen Wandler umfasst, der zur Messung der elektromagnetischen Verschmutzung geeignet ist.

14. Vorrichtung nach einem oder mehreren der vorangegangenen Ansprüche, **dadurch gekennzeichnet, dass** das Wandlermittel zumindest einen Wandler umfasst, der zur Messung der Stäube geeignet ist.

## Revendications

1. Dispositif pour la détection et l'indication d'au moins un paramètre environnemental, comprenant des moyens transducteurs indiqués pour détecter ledit au moins un paramètre détecté audit environnement et pour la production d'au moins un signal électrique en sortie proportionnel à celui-ci ainsi que les moyens indicateurs, lesdits moyens indicateurs étant du type optique et représentant l'état de normalité, d'alarme ou de danger du niveau dudit paramètre détecté audit environnement, **caractérisé en ce que** lesdits moyens transducteurs coopèrent avec des moyens de numérisation dudit au moins un signal et au moins une unité de comparaison indiquée pour comparer ledit au moins un signal numérique avec au moins une valeur de référence prédéfinie pour générer un signal de commande pour lesdits moyens indicateurs.

2. Dispositif selon la revendication 1) **caractérisé en ce que** lesdits moyens transducteurs comprennent au moins un amplificateur dudit signal détecté, positionné en amont desdits moyens numériques, indiqué pour garantir la fiabilité de l'interprétation et de la transmission dudit signal.

3. Dispositif selon la revendication 1) ou 2) **caractérisé en ce que** lesdits moyens indicateurs sont du type à feu de circulation, généralment associés avec une alarme et/ou un danger.

4. Dispositif selon la revendication 3) **caractérisé en ce que** lesdits indicateurs du type à feu de circulation comprennent trois feux de couleur vert, jaune et rouge avec lesquels trois niveaux sonores à l'intérieur dudit espace sont associés, représentant respectivement la normalité, l'avertissementet et le danger.

5. Dispositif selon l'une ou plusieurs des revendications précédentes **caractérisé en ce qu'**il comprend également un système de traitement électronique pour mémoriser/enregistrer, même pour de nombreuses années, les niveaux atteints par ledit paramètre détecté par lesdits moyens transducteurs.

6. Dispositif selon la revendication 5) **caractérisé en ce que** ledit système de traitement électronique comprend des moyens pour le classement desdits niveaux.

7. Dispositif selon la revendication 6) **caractérisé en ce que** lesdits moyens de classement comprennent au moins une unité de mémoire consultable indiquée pour contenir indéfiniment lesdits niveaux détectés.

8. Dispositif selon la revendication 5), 6) ou 7) **caractérisé en ce que** ledit système de traitement électronique est doté d'au moins un moniteur indiqué pour afficher graphiquement, directement ou après un processus adapté, lesdites valeurs mémorisées, ainsi que leurs variations dans une période de temps prédéterminée.

9. Dispositif selon la revendication 5), 6), 7) ou 8) **caractérisé en ce que** ledit système de traitement comprend au moins une unité d'impression indiquée pour imprimer, directement ou après un processus adapté, lesdites valeurs mémorisées ainsi que leurs variations dans une période de temps prédeterminée.

10. Dispositif selon l'une ou plusieurs des revendications précédentes **caractérisé en ce que** lesdits moyens transducteurs comprennent au moins un transducteur électroacoustique indiqué pour détecter la pression acoustique existante.

11. Dispositif selon l'une ou plusieurs des revendications précédentes **caractérisé en ce que** lesdits moyens transducteurs comprennent au moins un transducteur, indiqué pour détecter l'humidité.

12. Dispositif selon l'une ou plusieurs des revendications précédentes **caractérisé en ce que** lesdits moyens transducteurs comprennent au moins un transducteur indiqué pour détecter la température.

13. Dispositif selon l'une ou plusieurs des revendications précédentes **caractérisé en ce que** lesdits moyens transducteurs comprennent au moins un transducteur indiqué pour détecter la pollution électromagnétique.

14. Dispositif selon l'une ou plusieurs des revendications précédentes **caractérisé en ce que** lesdits moyens transducteurs comprennent au moins un transducteur indiqué pour détecter les poussières.
